# EUROPÄISCHE PATENTSCHRIFT

(11) **EP 2 806 203 B1**
(45) Veröffentlichungstag und Bekanntmachung des Hinweises auf die Patenterteilung: **07.04.2021**
(21) Anmeldenummer: 14167625.4
(22) Anmeldetag: 09.05.2014
(51) Int. Cl.: F16N 21/00, F01M 1/10, F01M 5/00, F01M 11/03

(54) **Baukastensystem für einen axial durchströmbaren Ventileinsatz**
Construction kit system for a valve insert with axial throughflow
Système modulaire pour une garniture de soupape à flux axial

(30) Priorität: 23.05.2013 DE 102013209524
(43) Veröffentlichungstag der Anmeldung: 26.11.2014
(73) Patentinhaber: Mahle International GmbH, 70376 Stuttgart (DE)
(72) Erfinder: Brodt, Michael, 71272 Renningen (DE); Walz, Michael, 70794 Filderstadt (DE)
(74) Vertreter: BRP Renaud & Partner mbB Rechtsanwälte Patentanwälte Steuerberater

(56) Entgegenhaltungen:
- EP-A1- 2 592 317
- DE-A1- 1 808 636
- US-A1- 2013 097 832

## Beschreibung

Die vorliegende Erfindung betrifft ein Baukastensystem für einen axial durchströmbaren Ventileinsatz. Die Erfindung betrifft außerdem eine Filtereinrichtung mit zumindest einem aus einem solchen Baukastensystem zusammengebauten Ventileinsatz.

Aus der EP 2 592 317 A1 ist ein axial durchströmbarer Ventileinsatz mit einem Rücklaufsperrventil und einem daran anbaubaren Deckel bekannt. Aus der US 2013/0097832 A1 und der DE 1 808 636 A1 sind weitere axial durchströmbare Ventileinsätze bekannt.

Bei herkömmlichen Filtereinrichtungen, wie beispielsweise Ölfiltern bzw. Ölmodulen, werden sogenannte Thermostatventile eingesetzt, die das Öl während der Kaltstartphase am Ölkühler vorbei leiten, wodurch sich dieses schneller aufheizen kann und dadurch der Verbrennungsmotor früher seine Betriebstemperatur erreicht. Des Weiteren ist in einem derartigen Ölkreislauf ein Rücklaufsperrventil angeordnet, das beim Abstellen des Verbrennungsmotors ein Leerlaufen der Filtereinrichtung verhindert, so dass bei einem Neustart vergleichsweise schnell der erforderliche Öldruck wieder vorhanden ist. Das genannte Rücklaufsperrventil und auch das genannte Thermostatventil sind dabei oftmals an separaten Stellen verbaut und benötigen dadurch einen nicht zu unterschätzenden Montageaufwand. Als weiterer Nachteil bekannter Rücklaufsperrventile ist zu nennen, dass diese oftmals als vorgefertigte Baugruppe ausgebildet und in diesem Zustand eingebaut werden. Für unterschiedliche Fahrzeugvarianten sind dadurch jeweils unterschiedliche Varianten des Rücklaufsperrventils vorzuhalten, wodurch vergleichsweise hohe Lager- und Logistikkosten entstehen.

Die vorliegende Erfindung beschäftigt sich daher mit dem Problem, die aus dem Stand der Technik bekannten Nachteile zu überwinden.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, unterschiedliche Varianten für einen axial durchströmbaren Ventileinsatz nunmehr aus einem Baukasten individuell und flexibel zusammenzusetzen, wobei das erfindungsgemäße Baukastensystem zumindest ein Rücklaufsperrventil sowie einen koaxial daran anbaubaren Deckel und/oder ein alternativ dazu koaxial daran anbaubares Bypassventil umfasst. Mit einem derartigen Baukastensystem ist es somit möglich, zumindest zwei unterschiedliche Alternativen des Ventileinsatzes anzubieten und zwar ohne aufwendige Lager- bzw. Logistikaufwendungen. Mit dem erfindungsgemäßen Baukastensystem ist es somit äußerst einfach möglich, einen axial durchströmbaren Ventileinsatz mit einem stets vorhandenen Rücklaufsperrventil und einem alternativ daran anbaubaren Deckel bzw. daran anbaubaren Bypassventil bereitzustellen, wobei die Montage des entsprechend gewünschten Ventileinsatzes vorzugsweise sogar direkt am Einbauort erfolgen kann.

Bei der erfindungsgemäßen Lösung weist das Baukastensystem zusätzlich einen Blindstopfen auf, der anstelle des Deckels bzw. des Bypassventils am Rücklaufsperrventil anbaubar ist und dem Verschließen eines Bypasskanals dient. Mit dem Baukastensystem lässt sich somit ein Ventileinsatz schaffen, welcher mit dem Blindstopfen in den Bypasskanal eindringt und diesen verschließt.

Zweckmäßig ist das Bypassventil als Thermostatventil oder als druckgesteuertes Ventil ausgebildet. Das Baukastensystem wird bei dieser Ausführungsform nochmals diversifiziert, indem für das Bypassventil zwei Alternativen angeboten werden, nämlich einerseits das Thermostatventil und andererseits das druckgesteuerte Ventil.

Bei der erfindungsgemäßen Lösung ist das Rücklaufsperrventil über eine Clippsverbindung mit dem Deckel, dem Bypassventil oder dem Blindstopfen verbindbar. Eine derartige Clippsverbindung ermöglicht eine schnelle, zuverlässige und äußerst einfache Montage des Ventileinsatzes, die zudem noch direkt am Einbauort erfolgen kann. Mit dem erfindungsgemäßen Baukastensystem ist somit eine äußerst flexible Herstellung unterschiedlichster Varianten des Ventileinsatzes möglich.

Generell ermöglicht das erfindungsgemäße Baukastensystem die Herstellung unterschiedlichster Varianten, nämlich beispielsweise eines axial durchströmbaren Ventileinsatzes, welcher lediglich ein Rücklaufsperrventil sowie einen daran angeclippsten Deckel oder ein daran angeclippstes Bypassventil umfasst. Ist keine Bypassströmung erwünscht, so kann anstelle des Bypassventils einfach ein Blindstopfen am Rücklaufsperrventil angeclippst werden. Sämtliche Bauelemente des Ventileinsatzes, nämlich das Rücklaufsperrventil, der Deckel, das Bypassventil und hier die Varianten als Thermostatventil oder als druckgesteuertes Ventil, sowie der Blindstopfen, ermöglichen eine schnelle, einfache und äußerst flexible Montage des jeweils gewünschten Ventileinsatzes.

Die Erfindung beruht weiter auf dem allgemeinen Gedanken, eine Filtereinrichtung mit zumindest einem derartigen Ventileinsatz auszustatten, wobei dieser Ventileinsatz dann aus dem zuvor beschriebenen Baukastensystem in individueller Weise zusammengesetzt ist. Die Filtereinrichtung kann beispielsweise als Kraftstoff- oder als Ölfilter ausgebildet sein. Besonders bei einem Ölfilter kann der Ventileinsatz ein Bypassventil, insbesondere ein als Thermostatventil ausgebildetes Bypassventil aufweisen, welches lediglich bei entsprechenden Temperaturen öffnet bzw. schließt. So wird beispielsweise beim Kaltstart des Verbrennungsmotors das Bypassventil geöffnet, wodurch ein Ölkühler umgangen wird und sich das Öl und damit auch der Verbrennungsmotor schneller aufheizen und ihre Betriebstemperatur erreichen. Alternativ ist auch denkbar, dass der erfindungsgemäße Ventileinsatz im Bereich eines Kühlsystems des Verbrennungsmotors eingesetzt wird, wobei auch hier beispielsweise das Bypassventil genutzt wird, um temperaturabhängig einen Kühler zu umgehen.

Von besonderem Vorteil bei dem erfindungsgemäßen Ventileinsatz ist darüber hinaus, dass durch die axiale Durchströmung der dort auftretende Strömungswiderstand deutlich reduziert werden kann, was sich positiv auf einen Energieverbrauch, insbesondere beispielsweise einer Ölpumpe, auswirkt. Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen axial durchströmbaren Ventileinsatz in einer Einbausituation in einem Filtergehäuse einer Filtereinrichtung,
- Fig. 2: ein erfindungsgemäßes Baukastensystem für einen axial durchströmbaren Ventileinsatz,
- Fig. 3: die Ansicht auf einen Ventileinsatz mit einem Rücklaufsperrventil und einem Deckel,
- Fig. 4: ein erfindungsgemäßer Ventileinsatz mit einem Rücklaufsperrventil und einem daran angeclippsten Blindstopfen,
- Fig. 5: einen erfindungsgemäßen Ventileinsatz mit einem daran angeclippsten und als Thermostatventil ausgebildeten Bypassventil,
- Fig. 6: eine Darstellung wie in Fig. 5, jedoch bei einem als druckgesteuerten Ventil ausgebildeten Bypassventil.

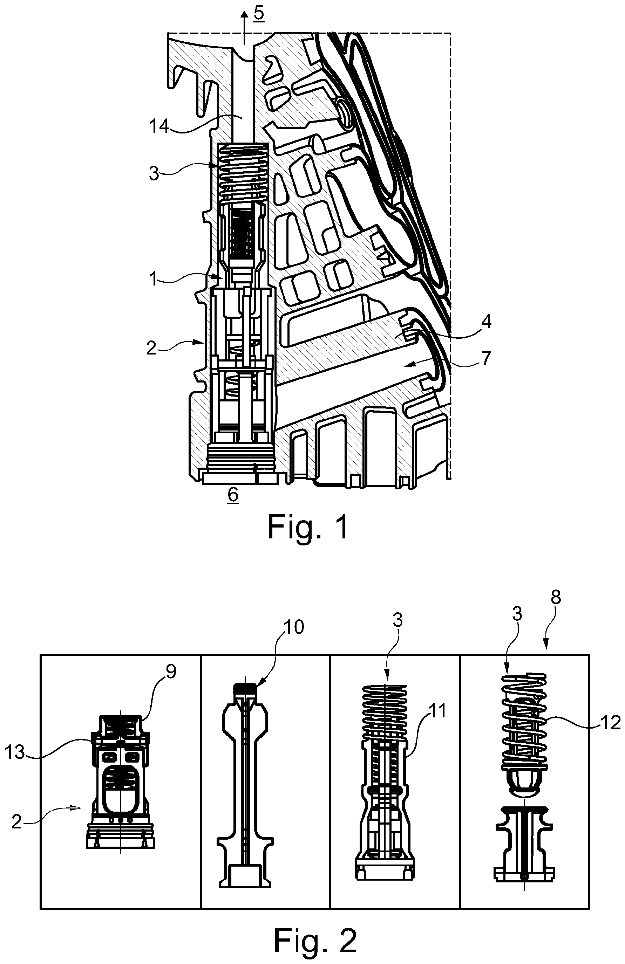

Entsprechend der Fig. 1, weist ein erfindungsgemäßer axial durchströmbarer Ventileinsatz 1 ein Rücklaufsperrventil 2 sowie ein koaxial dazu angeordnetes und in Reihe geschaltetes Bypassventil 3 auf. Das Bypassventil 3 und das Rücklaufsperrventil 2 sind axial zueinander beabstandet im Ventileinsatz 1 angeordnet. Betrachtet man das Rücklaufsperrventil 2 in seiner Einbausituation in einem Filtergehäuse 4 einer Filtereinrichtung 5, beispielsweise einem Ölfilter eines Verbrennungsmotors in einem Kraftfahrzeug, so kann man erkennen, dass der Ventileinsatz 1 in einer Leitung zwischen der eigentlichen Filtereinrichtung 5 und einer Pumpe 6 angeordnet ist. Öffnet das Rücklaufsperrventil 2, so kann dieses in Abhängigkeit der Schaltstellung des Bypassventils 3 einen Fluidstrom, beispielsweise einen Ölstrom, zwischen einem Ölkühler 7 und der Filtereinrichtung 5 aufteilen.

Um nun den Ventileinsatz 1 möglichst flexibel herstellen zu können, ist ein erfindungsgemäßes Baukastensystem 8 (vgl. Fig. 2) mit zumindest einem Rücklaufsperrventil 2 und einem koaxial daran anbaubaren Deckel 9 bzw. einem daran anbaubaren Bypassventil 3 vorgesehen. Darüber hinaus weist das erfindungsgemäße Baukastensystem 8 einen anstelle des Deckels 9 bzw. des Bypassventils 3 am Rücklaufsperrventil 2 anbaubaren Blindstopfen 10 zum Verschließen eines den Ölkühler 7 umgehenden Bypasskanals 14 auf.

Das Bypassventil 3 kann beispielsweise als Thermostatventil 11 oder als druckgesteuertes Ventil 12 ausgebildet sein. Eine Verbindung zwischen dem Deckel 9, dem Blindstopfen 10 bzw. dem Bypassventil 3 und dem jeweiligen Rücklaufsperrventil 2 kann dabei über eine einfache Clippsverbindung 13 erfolgen, so dass die Montage unterschiedlichster Ventileinsätze 1 einfach und flexibel möglich ist.

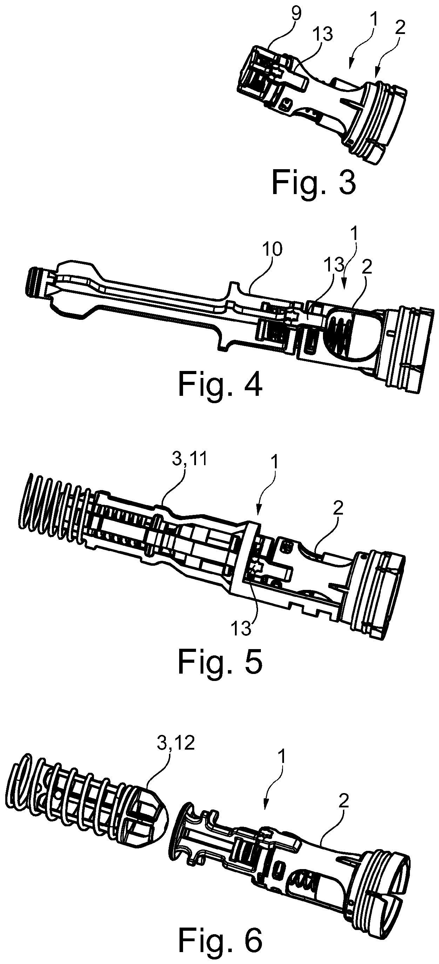

In Fig. 3 ist beispielsweise ein aus dem Baukastensystem 8 zusammengebauter Ventileinsatz 1 mit einem Rücklaufsperrventil sowie einem daran angeclippsten Deckel 9 gezeigt. In Fig. 4 ist ein Ventileinsatz 1 dargestellt, bei welchem Blindstopfen 10 über eine entsprechende Clippsverbindung 13 mit dem Rücklaufsperrventil 2 verbunden, d.h. verclippst ist. Fig. 5 zeigt einen erfindungsgemäßen Ventileinsatz 1, hergestellt aus dem Baukastensystem 8 nach Fig. 2, bei welchem mit dem Rücklaufsperrventil 2 ein Bypassventil 3, genauer gesagt ein Thermostatventil 11 verclippst ist.

Schließlich zeigt Fig. 6 einen Ventileinsatz 1, der ebenfalls aus den einzelnen Komponenten des Baukastensystems 8 gemäß der Fig. 2 hergestellt werden kann, und welcher neben dem Rücklaufsperrventil 2 ein als druckgesteuertes Ventil 12 ausgebildetes Bypassventil 3 umfasst.

Das gemäß der Fig. 1 dargestellte Filtergehäuse 4 der Filtereinrichtung 5 ist dabei lediglich rein exemplarisch zu verstehen, so dass der erfindungsgemäße Ventileinsatz 1 generell auch in andere Filtereinrichtungen, beispielsweise in ein Ölfilter oder ein Kraftstofffilter, einbaubar ist. Auch ein Einbauen des erfindungsgemäßen axial durchströmbaren Ventileinsatzes 1 in einen Kühlwasserkreislauf ist denkbar.

Mit dem erfindungsgemäßen Baukastensystem 8 kann ein Ventileinsatz 1 individuell, kostengünstig, einfach und äußerst flexibel hergestellt werden, so dass nicht wie bisher unterschiedlichste fertig gebaute Varianten des Ventileinsatzes vorgehalten und beispielsweise gelagert werden müssen, und der Ventileinsatz 1 stets einfach und schnell individuell von einem Werker, beispielsweise am Einbauort, nach entsprechenden Anforderungen, gefertigt werden kann. Das Baukastensystem 8 lässt hierbei unterschiedlichste Varianten des Ventileinsatzes 1 zu, wodurch mannigfaltige Alternativen problemlos abdeckbar sind.

## Patentansprüche

1. Ventileinsatz-Baukastensystem (8) eines axial durchströmbaren Ventileinsatzes (1) mit einem Rücklaufsperrventil (2)
**dadurch gekennzeichnet,**
- **dass** das Ventileinsatz-Baukastensystem (8) einen Deckel (9), ein Bypassventil (3) und einen Blindstopfen (10) aufweist, die alternativ koaxial am Rücklaufsperrventil (2) anbaubar sind,
- **dass** das Rücklaufsperrventil (2) über eine Clippsverbindung (13) mit dem Bypassventil (3), dem Deckel (9) oder dem Blindstopfen (10) verbindbar ist.

2. Ventileinsatz-Baukastensystem nach Anspruch 1,
**dadurch gekennzeichnet,**
**dass** das Bypassventil (3) als Thermostatventil (11) oder als druckgesteuerter Ventileinsatz (12) ausgebildet ist.

3. Filtereinrichtung (5) mit zumindest einem aus einem Ventileinsatz-Baukastensystem (8) nach einem der Ansprüche 1 oder 2 zusammengebauten Ventileinsatz (1).

4. Filtereinrichtung nach Anspruch 3,
**dadurch gekennzeichnet,**
**dass** die Filtereinrichtung (5) als Kraftstoff- oder als Ölfilter ausgebildet ist.

## Claims

1. Valve insert construction kit system (8) of a valve insert (1) with axial throughflow having a non-return valve (2)
**characterised in that**
- the valve insert construction kit system (8) has a cover (9), a bypass valve (3) and a blind plug (10), which can alternatively be attached coaxially onto the non-return valve (2),
- the non-return valve (2) can be connected via a clip connection (13) to the bypass valve (3), the cover (9) or the blind plug (10).

2. Valve insert construction kit according to claim 1,
**characterised in that**
the bypass valve (3) is configured as a thermostat valve (11) or as a pressure-controlled valve insert (12).

3. Filter device (5) having at least one valve insert (1) assembled from a valve insert construction kit system (8) according to any of claims 1 or 2.

4. Filter device according to claim 3,
**characterised in that**
the filter device (5) is configured as a fuel or oil filter.

## Revendications

1. Système modulaire de garniture de soupape (8) d'une garniture de soupape (1) pouvant être traversée axialement avec une soupape de verrouillage de retour (2), **caractérisé en ce**
- **que** le système modulaire de garniture de soupape (8) présente un couvercle (9), une soupape de dérivation (3) et un bouchon obturateur (10) qui peuvent être rapportés en alternance coaxialement sur la soupape de verrouillage de retour (2),
- **que** la soupape de verrouillage de retour (2) peut être reliée par une liaison à clips (13) à la soupape de dérivation (3), au couvercle (9) ou au bouchon obturateur (10).

2. Système modulaire de garniture de soupape selon la revendication 1,
**caractérisé en ce**
**que** la soupape de dérivation (3) est réalisée comme soupape thermostatique (11) ou comme garniture de soupape (12) commandée par pression.

3. Dispositif de filtre (5) avec au moins une garniture de soupape (1) composée d'un système modulaire de garniture de soupape (8) selon l'une des revendications 1 ou 2.

4. Dispositif de filtre selon la revendication 3,
**caractérisé en ce**
**que** le dispositif de filtre (5) est réalisé comme filtre à carburant ou comme filtre à huile.
